# NEUE EUROPÄISCHE PATENTSCHRIFT

(11) **EP 3 190 163 B2**
(45) Veröffentlichungstag und Bekanntmachung des Hinweises auf die Entscheidung über den Einspruch: **02.04.2025**
(45) Hinweis auf die Patenterteilung: 27.01.2021
(21) Anmeldenummer: 16204321.0
(22) Anmeldetag: 15.12.2016
(51) Int. Cl.: C09J 7/21, C09J 7/25, D03D 3/00, D03D 15/00, H02G 3/04

(54) **KLEBEBAND, INSBESONDERE WICKELBAND ZUR UMMANTELUNG VON KABELN IN AUTOMOBILEN**
ADHESIVE TAPE, IN PARTICULAR WINDING TAPE FOR SHEATHING CABLES IN AUTOMOBILES
BANDE ADHÉSIVE, EN PARTICULIER BANDE À ENROULER DESTINÉE À ENROBER DES CÂBLES DANS DES AUTOMOBILES

(30) Priorität: 08.01.2016 DE 202016100057 U
(43) Veröffentlichungstag der Anmeldung: 12.07.2017
(73) Patentinhaber: certoplast Technische Klebebänder GmbH, 42285 Wuppertal (DE)
(72) Erfinder: Leermann, Timo, 42285 Wuppertal (DE); Rambusch, Peter, 42115 Wuppertal (DE)
(74) Vertreter: Nunnenkamp, Jörg

(56) Entgegenhaltungen:
- EP-A1- 2 821 453
- EP-A1- 2 821 453
- EP-B1- 1 074 595
- EP-B1- 2 322 385
- EP-B1- 2 322 385
- DE-A1- 102013 102 602
- DE-A1- 102013 102 602
- DE-U1- 202009 018 980
- DE-U1- 202009 018 980
- JP-A- 2012 017 415

## Beschreibung

Die Erfindung betrifft die Verwendung von gezwirnten Schussfäden zur Erhöhung der Abriebbeständigkeit bei einem in Querrichtung handeinreißbaren Wickelband zur Ummantelung von Kabeln in Automobilen, mit einem bandförmigen Gewebeträger aus materialgleichen Kettfäden und Schussfäden, und mit einer wenigstens einseitigen Klebebeschichtung, wobei die Fadenstärke der jeweiligen Schussfäden größer oder gleich der Fadenstärke der jeweiligen Kettfäden ist, und wobei die auf die Breite bezogene Fadenstärke der Kettfäden kleiner oder gleich der auf die Länge bezogenen Fadenstärke der Schussfäden ist.

Gewebeklebebänder und insbesondere Wickelbänder zur Ummantelung von Kabeln in Automobilen müssen eine Vielzahl an Anforderungen erfüllen, die sich zum Teil widersprechen. So kommt es einerseits darauf an, dass das fragliche Klebeband bzw. Gewebeklebeband mechanisch beständig ist und auch gegenüber Benzin, Öl sowie Wärme resistent. Ferner sollen solche Klebebänder handeinreißbar ausgelegt sein, um ihre Verarbeitung beim Ummanteln von Kabeln und bei der Herstellung von Kabelbäumen zu erleichtern. Schließlich wird in diesem Zusammenhang auch eine gewisse Abriebfestigkeit des bandförmigen Gewebeträgers gefordert, um beispielsweise ein Durchscheuern der Ummantelung im Betrieb bzw. im Innern des Kraftfahrzeuges zu verhindern. Um diese verschiedenen Anforderungen zu erfüllen, werden im Stand der Technik unterschiedliche Ansätze verfolgt.

So ist aus der EP 1 074 595 B1 ein derartiges Klebeband bekannt, bei welchem die Kettfäden durch die Klebebeschichtung gegenüber den Schussfäden fixiert werden. Auf diese Weise werden Reißfestigkeiten in Querrichtung von weniger als 10 N beobachtet, was vorliegend als handeinreißbar qualifiziert wird. Aufgrund der niedrigen Webdichte bei dem bekannten Gewebeklebeband besteht jedoch die Gefahr, dass die Schussfäden gegeneinander verschoben werden, so dass die beschriebene zusätzliche Fixierung durch die Klebebeschichtung erforderlich ist. Das wiederum hat zur Folge, dass insgesamt die Flexibilität des bekannten Gewebeklebebandes verringert ist, so dass die Verarbeitung leidet. Außerdem werden relativ geringe Abriebbeständigkeiten entsprechend der Abriebklasse A oder B nach der Norm LV312 beobachtet.

Einzelheiten zu dieser im Automobilbereich gängigen Norm zur Bestimmung verschiedener Abriebklassen werden in der EP 2 322 385 B1 beschrieben, auf die ausdrücklich verwiesen sei. Tatsächlich beschäftigt sich diese Vorveröffentlichung nach der EP 2 322 385 B1 mit einem insgesamt gattungsähnlichen Gewebeklebeband. Um an dieser Stelle die Abriebfestigkeit zu steigern, wird so vorgegangen, dass die längenbezogene Fadenstärke der Schussfäden bzw. die Fadenstärke der Schussfäden jeweils mindestens etwa das Vierfache der breitenbezogenen Fadenstärke der Kettfäden bzw. der Fadenstärke der Kettfäden beträgt. Dadurch soll auch ohne eine zusätzliche Fixierung der Fäden untereinander durch die Klebebeschichtung an ihren Kreuzungsstellen eine ausreichende Verbundfestigkeit des bekannten Gewebeträgers erzielt werden.

Außerdem wird eine gute Handeinreißbarkeit in Richtung der Schussfäden geltend gemacht. Gleichzeitig soll die gegenüber den Kettfäden deutlich erhöhte Fadenstärke der Schussfäden eine Abriebfestigkeit entsprechend der Klasse C oder noch größer gemäß LV312 ermöglichen. Dazu beträgt die Anzahl der Schussfäden 20 pro Zentimeter Länge und liegt ihre Stärke im Rahmen einer ersten Variante bei 470 dtex. Eine andere Variante greift auf Schussfäden der Stärke von 570 dtex zurück, wobei die Schussfäden aus drei Einzelfäden gebildet sind. Die Einzelfäden verfügen über eine Stärke von 235 dtex für einen Einzelfaden und jeweils 167 dtex für die verbleibenden beiden anderen Einzelfäden.

Das bekannte Gewebe nach der EP 2 322 385 B1 ist relativ komplex aufgebaut und folglich in seiner Herstellung aufwendig. Denn die Kettfäden sind aus Polyester gefertigt, wohingegen die Schussfäden aus Polyamid bestehen. Dadurch wird ein nicht sortenreiner Gewebeträger bzw. ein solcher aus nicht materialgleichen Kettfäden und Schussfäden realisiert. Dadurch bereitet der Gewebeträger zusätzlich Probleme bei einem eventuellen Recycling und führt durch den Rückgriff auf Polyamid zu erhöhten Rohstoffkosten.

Eine andere Lösung nach der DE 10 2013 102 602 A1 sieht bei einem Kabelwickelband vor, dass das dortige Gewebe aus einem Garn besteht, welches erneut aus Polyamidwerkstoff gebildet ist. In diesem Fall ist das jeweilige Garn aus einzelnen Filamenten gebildet, die um eine mittlere Längsachse des Garns miteinander verdreht sind. Dadurch wird prinzipiell die Zugfestigkeit des Garns gesteigert und soll auch die Abriebfestigkeit erhöht werden. Dabei wird jedoch erneut auf einen relativ kostspieligen Gewebeträger zurückgegriffen.

Der Erfindung liegt das technische Problem zugrunde, ein derartiges Klebeband und insbesondere Gewebeklebeband so weiterzuentwickeln, dass eine kostengünstige Lösung zur Verfügung gestellt wird und gleichzeitig die Abriebfestigkeit, Handeinreißbarkeit und einfache Recyclingfähigkeit realisiert sind.

Zur Lösung dieser technischen Problemstellung ist die Verwendung von gezwirnten Schussfäden zur Erhöhung der Abriebbeständigkeit bei einem in Querrichtung handeinreißbaren Wickelband zur Ummantelung von Kabeln in Automobilen nach Anspruch 1 vorgesehen.

Erfindungsgemäß ist vorgesehen, dass die Schussfäden sich jeweils aus um eine Längsachse miteinander verdrehten mehreren Einzelfäden zusammensetzen, wobei der jeweilige Schussfaden aus zwei oder mehr Einzelfäden gebildet ist. Die zwei oder mehr Einzelfäden sind dann mit mehr als 400 Drehungen pro Meter Schussfaden miteinander verdreht. In letztgenanntem Fall können die Einzelfäden erneut aus Filamentfäden zusammengesetzt sein, die ihrerseits miteinander verdreht sind oder nicht.

Die Erfindung greift also zunächst einmal auf einen Polyestergewebeträger zurück, welcher aus sortenreinen bzw. materialgleichen Kettfäden und Schussfäden hergestellt wird, sich folglich einfach recyceln lässt. Denn bei den Kettfäden und Schussfäden handelt es sich um Polyesterfäden. Dadurch ist das Recycling vereinfacht und lässt sich das erfindungsgemäße Klebeband besonders kostengünstig herstellen. Zugleich erfüllt ein Polyestergewebe bzw. erfüllen die Polyesterfäden per se einen Großteil der Anforderungen, wie sie an Wickelbänder zur Ummantelung von Kabeln in Automobilen gestellt werden.

So weisen Polyesterfäden nicht nur eine hohe Zugfestigkeit auf, sondern sind darüber hinaus beständig gegenüber Chemikalien, Benzin etc. Außerdem ist ihre Langzeitstabilität hervorragend und neigen Polyesterfäden nicht oder kaum zur Feuchtigkeitsaufnahme. Durch die erfindungsgemäße Auslegung, wonach die Schussfäden im Rahmen zumindest einer Variante insgesamt deutlich "dicker" als die Kettfäden ausgelegt sind, wird darüber hinaus die zur Verarbeitung notwendige Handeinreißbarkeit zur Verfügung gestellt. Das gilt auch für den Fall, dass die Kett- und Schussfäden über eine gleiche Feinheit verfügen. Denn im Regelfall beträgt die Fadenstärke der Kett- und Schussfäden typischerweise mehr als 40 dtex. Grundsätzlich kann die Fadenstärke auch 80 dtex und mehr betragen. Vorzugsweise werden Fadenstärken von 100 dtex und mehr, insbesondere 167 dtex und mehr beobachtet. In den überwiegenden Fällen zeichnet sich das erfindungsgemäße Klebeband dadurch aus, dass es vorteilhaft handeinreißbar ausgebildet ist, und zwar unter Berücksichtigung einer Querreißkraft von weniger als 10 N/cm.

Das heißt, als Kriterium für die Handeinreißbarkeit wird die Reißkraft in Querrichtung, die Querreißkraft von weniger als 10 N/cm zugrunde gelegt. Das bedeutet für einen Benutzer, dass er in Richtung der Schussfäden zum Zerreißen der Kettfäden Reißkräfte von weniger als 10 N pro Zentimeter Breite in der Querrichtung benötigt.

Durch die im Rahmen einer Variante unterschiedliche Fadenstärke der dünneren Kettfäden im Vergleich zu den dickeren Schussfäden und die zusätzliche Tatsache, dass in der Regel 40 bis 60 Kettfäden/cm und 20 bis 30 Schussfäden/cm realisiert sind, verfügt das erfindungsgemäße Gewebe bzw. der Polyestergewebeträger über eine ausreichende Verbundfestigkeit des Trägergewebes, und zwar ohne dass hierzu die obligatorische Klebebeschichtung beiträgt oder beitragen muss. Dadurch wird die zuvor beschriebene gute Handeinreißbarkeit in Richtung der Schussfäden sichergestellt. Die ausreichende Verbundfestigkeit des Trägergewebes wird zugleich noch dadurch unterstützt und gewährleistet, dass erfindungsgemäß die Schussfäden gezwirnt sind. Das heißt, eine ausreichende Verbundfestigkeit des Trägergewebes in Verbindung mit guter Handeinreißbarkeit in Richtung der Schussfäden wird auch für den Fall beobachtet, dass die Fadenstärke der Kettfäden und diejenige der Schussfäden gleich oder in etwa gleich ausgelegt ist.

Die aus den zwei oder mehr Einzelfäden jeweils durch Zwirnen gebildeten Schussfäden tragen darüber hinaus und wesentlich zu einer hohen Abriebfestigkeit des erfindungsgemäßen Klebebandes bei. Tatsächlich beobachtet man eine Steigerung der Abriebfestigkeit um in etwa 20% bis 50% im Vergleich zu einem Klebeband mit ansonsten gleichem Aufbau, gleicher Fadendicke und gleichem Fadengewicht, bei dem die Schussfäden nicht gezwirnt sind.

So ist es möglich, dass das erfindungsgemäße Klebeband wenigstens die Abriebklasse B, insbesondere die Abriebklasse C an einem Dorn mit 5 mm Durchmesser gemäß der Prüfungsrichtlinie LV 312 erfüllt. Das heißt, wenn das erfindungsgemäße Klebeband auf dem fraglichen Dorn mit 5 mm Durchmesser aufgeklebt und dann mit einem Schabwerkzeug eines Nadeldurchmessers von 0,45 mm sowie bei einer Gewichtskraft von 7 N die Anzahl der Hübe bestimmt wird, die benötigt werden, um das Klebeband durchzuscheuern, so korrespondiert die Abriebklasse C zu 500 bis 999 Hüben an dieser Stelle.

Wie bereits zuvor beschrieben, beträgt die jeweilige Fadenstärke des Schussfadens und auch des Kettfadens in der Regel mehr als 100 dtex. Insbesondere werden Fadenstärken von 167 dtex und mehr beobachtet. Ganz besonders bevorzugt sind Fadenstärken in diesem Bereich von 200 dtex, ganz besonders bevorzugt von 300 dtex und mehr. Sofern nach einer Variante so gearbeitet wird, dass die Fadenstärke der jeweiligen Schussfäden größer als diejenige der jeweiligen Kettfäden bemessen ist, beträgt üblicherweise die jeweilige Fadenstärke des gezwirnten Schussfadens mehr als 400 dtex, insbesondere mehr als 450 dtex. Als Obergrenze empfiehlt die Erfindung für den gezwirnten Schussfaden in diesem Zusammenhang 550 dtex. Ganz besonders bevorzugt liegt die Fadenstärke des gezwirnten Schussfadens bei ca. 500 dtex. Dabei kann der zugehörige Schussfaden aus zwei bis maximal zehn Einzelfäden aufgebaut sein. Der Schussfaden wird durch Zwirnen bzw. Verdrehen der der Einzelfäden um die jeweilige Längsachse hergestellt.

Außerdem empfiehlt die Erfindung, dass der jeweilige Schussfaden aus den zwei oder mehr Einzelfäden gebildet ist, die mit mehr als 450 Drehungen pro Meter und insbesondere mehr als 500 Drehungen pro Meter verdreht sind. Vorzugsweise wird an dieser Stelle für den jeweiligen Schussfaden mit 500 bis 600 Drehungen pro Meter Schussfaden beim Verzwirnen gearbeitet. Der Schussfaden kann eine Fadenstärke von bis zu 500 dtex aufweisen. Die Einzelfäden verfügen alternativ über eine Fadenstärke von jeweils 100 dtex bis 200 dtex.

Dadurch lässt sich erfindungsgemäß der Schussfaden aus relativ dünnen und herkömmlichen Einzelfäden einerseits herstellen, wird andererseits durch die Schussfäden wesentlich und positiv die Abriebfestigkeit des erfindungsgemäßen Klebebandes beeinflusst. Das gelingt selbst dann, wenn die Fadenstärke des betreffenden und gezwirnten Schussfadens weniger als 550 dtex beträgt und vorzugsweise sogar lediglich bei ca. 500 dtex angesiedelt ist. Ebenso dann, wenn die Fadenstärke des gezwirnten Schussfadens ca. 200 dtex beträgt.

Das lässt sich darauf zurückführen, dass durch das Zwirnen einerseits die Zugfestigkeit des Schussfadens erhöht wird, andererseits der Schussfaden nach wie vor ausreichend geschmeidig für die Verarbeitung ist. Das stellt die Erfindung dadurch sicher, dass die Filamentfäden bzw. die Einzelfäden mit maximal 600 Drehungen pro Meter Schussfaden miteinander verdreht werden. Zugleich zeichnen sich die gezwirnten Schussfäden durch eine erhöhte Abriebfestigkeit aus und wird zumindest die Abriebklasse C bei dem betreffenden erfindungsgemäßen Klebeband beobachtet. Das lässt sich ganz wesentlich auf die entsprechend gezwirnten Schussfäden zurückführen.

Beim Zwirnen der Einzelfäden zur Herstellung des Schussfadens kann durchgängig mit einem Rechtsdrall oder einem Linksdrall der Einzelfäden gearbeitet werden. In beiden Fällen stellt sich ein stabiler zylindrischer Querschnitt des jeweiligen verzwirnten Schussfadens ein. Nach DIN 60 900-4 unterscheidet man je nach Drehsinn zwischen S (Rechtsdrall) und Z (Linksdrall), je nachdem ob die Einzelfäden beim senkrechten Hängenlassen parallel dem Schrägstrich eines S oder Z verlaufen. Grundsätzlich kann natürlich auch mit Schussfäden im Gewebeträger gearbeitet werden, die beispielsweise abwechselnd einen Rechtsdrall und Linksdrall aufweisen. Im Regelfall verfügen die Schussfäden jedoch durchgängig über den Rechtsdrall oder alternativ den Linksdrall.

Es hat sich bewährt, wenn die auf die Breite bezogene Fadenstärke der Kettfäden zwischen 2000 dtex/cm bis 4000 dtex/cm angesiedelt ist. Für die auf die Länge bezogene Fadenstärke der Schussfäden empfiehlt die Erfindung einen Bereich von 8000 dtex/cm bis 16000 dtex/cm. Die Kettfäden und die Schussfäden bzw. die den gezwirnten Schussfaden bildenden Einzelfäden sind im Regelfall aus jeweils 20 bis 80 Filamenten bzw. Filamentfäden gebildet. Außerdem hat es sich in diesem Zusammenhang bewährt, wenn die jeweiligen Einzelfäden jeweils texturiert sind, also eine Kräuselstruktur aufweisen. Das gift namentlich für die Kettfäden ebenso wie für die Einzelfäden zur Herstellung des gezwirnten Schussfadens und folglich auch für den Schussfaden als solchen. Durch die Texturierung wird die Elastizität derjeweiligen Fäden und ihr Volumen vergrößert.

Im Ergebnis wird ein Gewebeklebeband und insbesondere Wickelband zur Ummantelung von Kabeln in Automobilen zur Verfügung gestellt, welches zunächst einmal einfach und kostengünstig hergestellt werden kann. Durch den Rückgriff auf Polyesterfäden sowohl in der Kette als auch im Schuss ist darüber hinaus ein sortenreines Recycling möglich. Ferner überzeugt das erfindungsgemäße Klebeband bei im Vergleich zum Stand der Technik verringerter Fadenstärke und folglich verringertem Gewicht gleichwohl über vergleichbare Abriebbeständigkeit. Dennoch wird nach wie vor die notwendige Handeinreißbarkeit in Querrichtung gewährleistet, so dass die Verarbeitung einfach gelingt. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: das Klebeband in einer perspektivischen Aufsicht und
- Fig. 2: einen Schnitt durch das Klebeband nach Fig. 1.

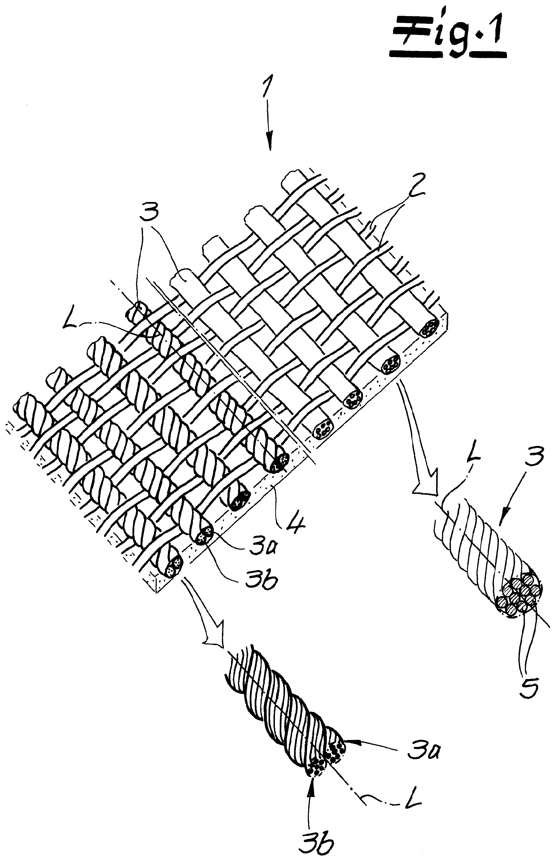

In der Fig. 1 ist ein Gewebeklebeband dargestellt, bei dem es sich im Ausführungsbeispiel um ein Wickelband bzw. Kabelwickelband handelt. Das Klebeband bzw. Wickelband wird zur Ummantelung von Kabeln in Automobilen eingesetzt. Zu diesem Zweck verfügt das Klebeband über einen bandförmigen Gewebeträger 1, welcher sich aus sortenreinen sowie materialgleichen Kettfäden 2 und Schussfäden 3 zusammensetzt. Im Ausführungsbeispiel sind sowohl die Kettfäden 2 als auch die Schussfäden 3 als jeweils Polyesterfäden 2, 3 ausgebildet. Außerdem ist eine wenigstens einseitige Klebebeschichtung 4 realisiert.

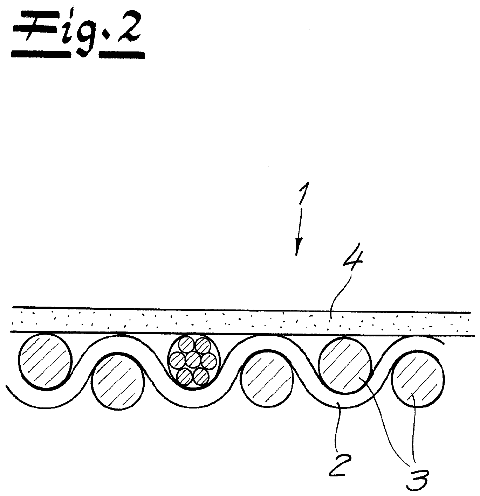

Anhand der Schnittdarstellung in der Fig. 2 erkennt man, dass die Klebebeschichtung 4 vorliegend auf einer Rückseite des Gewebeträgers 1 vorhanden ist. Bei der Klebebeschichtung 4 mag es sich um eine solche handeln, die unter Rückgriff auf einen Kleber auf Acrylatbasis auf den Gewebeträger 1 durch beispielsweise eine Düsenbeschichtung als Hotmelt aufgebracht worden ist. Das gilt selbstverständlich nur beispielhaft und nicht einschränkend.

Anhand der Fig. 1 erkennt man, dass die Fadenstärke der jeweiligen Schussfäden 3 größer ist als die Fadenstärke der jeweiligen Kettfäden 2. Außerdem ist die auf die Breite bezogene Fadenstärke der Kettfäden 2 kleiner als die auf die Länge bezogene Fadenstärke der Schussfäden 3 ausgelegt. Das gilt jedenfalls für das dargestellte Ausführungsbeispiel. Grundsätzlich können die Schussfäden 3 und die Kettfäden 2 von ihrer Fadenstärke her aber auch jeweils gleich ausgebildet sein. Das ist jedoch nicht dargestellt. In diesem Fall entspricht dann auch die auf die Breite bezogene Fadenstärke der Kettfäden der auf die Länge bezogenen Fadenstärke der Schussfäden. In beiden Fällen kommen nach dem Ausführungsbeispiel 46 Kettfäden 2 pro Zentimeter Breite des Gewebeträgers 1 zum Einsatz. Die Anzahl der Schussfäden 3 pro Zentimeter Länge des Gewebeträgers 1 beträgt 27/cm. Das ist im Ausführungsbeispiel nur teilweise bildlich wiedergegeben.

Die Fadenstärke bzw. Fadenfeinheit der jeweiligen Kettfäden 2 beträgt 48 dtex. In Verbindung mit der zuvor angegebenen Fadenzahl von 46/cm ergibt sich hieraus die auf die Breite bezogene Fadenstärke der Kettfäden 2 zu 46 cm . 48 dtex = 2208 dtex/cm.

Die Schussfäden 3 verfügen demgegenüber über eine Fadenstärke bzw. Fadenfeinheit von ca. 500 dtex. Bei den Schussfäden 3 handelt es sich im Ausführungsbeispiel und erfindungsgemäß um gezwirnte Schussfäden 3, die vorliegend mit mehr als 400 Drehungen pro Meter Schussfaden 3 gezwirnt sind. Tatsächlich werden vorliegend zwei Varianten verfolgt. So zeigt die Fig. 1 im linken Teil Schussfäden 3, die sich aus jeweils zwei Einzelfäden 3a, 3b zusammensetzen, die jeweils um eine Längsachse L miteinander verdreht sind. Das ist im linken Bereich der Fig. 1 dargestellt. Die Einzelfäden 3a, 3b weisen im Ausführungsbeispiel eine Fadenstärke von jeweils 250 dtex auf. Allgemein verfügen die Einzelfäden jeweils über eine Fadenstärke von 100 dtex bis 300 dtex.

Im rechten Teil der Fig. 1 ist eine nicht erfindungsgemäße Variante dargestellt, bei welcher sich der Schussfaden 3 jeweils aus um eine Längsachse L miteinander verdrehten Filamentfäden 5 zusammensetzt. Bei dem Schussfaden 3 handelt es sich um einen Einzelfaden. Die Filamentfäden 5 dieses Einzelfadens sind erneut mit mehr als 400 Drehungen pro Meter Schussfaden 3 miteinander verdreht. An dieser Stelle können insgesamt 20 bis 80 Filamentfäden 5 pro Schussfaden 3 zum Einsatz kommen. Das ist in der Fig. 1 lediglich vereinfacht und schematisch dargestellt. In beiden Varianten der Fig. 1 beträgt die Fadenstärke des Schussfadens in etwa 500 dtex oder weniger.

Außerdem ist die Auslegung so getroffen, dass die beiden Einzelfäden 3a, 3b bei der linken erfindungsgemäßen Variante nach der Fig. 1 eine jeweils gleiche und übereinstimmende Fadenstärke von 250 dtex im Beispielfall aufweisen. Grundsätzlich kann natürlich auch mit Einzelfäden 3a, 3b unterschiedlicher Fadenstärke beim Verzwirnen und der Herstellung des jeweiligen Schussfadens 3 gearbeitet werden. Vergleichbares gilt für den Fall, dass Schussfäden 3 mit einer unterschiedlichen Anzahl an Filamentfäden 5 entsprechend der Variante im rechten Teil der Fig. 1 zum Einsatz kommen. Beim Verzwirnen werden die Filamentfäden 5 ebenso wie die Einzelfäden 3a, 3b mit mehr als 400 Drehungen pro Meter Schussfaden 3 miteinander um die jeweilige Längsachse L verdreht.

Das heißt, der jeweils gezwirnte Schussfaden 3 ist im linken Teil der Fig. 1 aus den Einzelfäden 3a, 3b aufgebaut, die pro Meter Länge des gezwirnten Schussfadens 3 mit mehr als 400 Drehungen miteinander um die Längsachse L verdreht worden sind. Bei der im rechten Teil der Fig. 1 dargestellten Variante ist der gezwirnte Schussfaden 3 aus den Filamentfäden 5 aufgebaut, die wiederum pro Meter Länge des gezwirnten Schussfadens 3 mit mehr als 400 Drehungen miteinander um die zugehörige Längsachse L verdreht worden sind. Auf diese Weise beträgt die Fadenstärke des gezwirnten Schussfadens 3 in beiden Fällen weniger als 550 dtex und mehr als 450 dtex, im Ausführungsbeispiel ca. 500 dtex.

Anstelle der zwei Einzelfäden 3a, 3b zur Herstellung des gezwirnten Schussfadens 3 gemäß der Variante im linken Teil des Fig. 1 können maximal bis zu zehn Einzelfäden 3a, 3b für die Herstellung genutzt werden, was jedoch nicht dargestellt ist. Außerdem wird meistens mit 500 bis 600 Drehungen der Einzelfäden 3a, 3b pro Meter des gezwirnten Schussfadens 3 gearbeitet. Die Schussfäden 3 verfügen durchweg über einen Rechtsdrall oder Linksdrall der Einzelfäden 3a, 3b, wie dies einleitend bereits beschrieben wurde.

Da die Schussfäden 3 vorliegend jeweils eine Fadenfeinheit bzw. Fadenstärke von ca. 500 dtex aufweisen und im Ausführungsbeispiel insgesamt 27 Schussfäden/cm zum Einsatz kommen, beträgt die auf die Länge bezogene Fadenstärke der Schussfäden insgesamt 27 cm · 500 dtex = 13500 dtex/cm.

Daraus kann der sogenannte Titerquotient ermittelt werden, also das Verhältnis der auf die Länge bezogenen Fadenstärke der Schussfäden 3 zur auf die Breite bezogenen Fadenstärke der Kettfäden 2. Dieses Verhältnis beträgt vorliegend ca. 6,1, nämlich 13500: 2208. Generell arbeitet die Erfindung mit Titerquotienten von 2 bis 8. Denn die auf die Breite bezogene Fadenstärke der Kettfäden 2 ist insgesamt zwischen 2000 bis 4000 dtex/cm angesiedelt. Die auf die Länge bezogene Fadenstärke der Schussfäden 3 liegt demgegenüber im Bereich von 8000 dtex/cm bis 16000 dtex/cm.

Die einzelnen Fäden 2, 3, das heißt die Kettfäden 2 und/oder die Schussfäden 3 können jeweils texturiert sein. Das gilt folglich auch für die Einzelfäden 3a, 3b. Außerdem ist das dargestellte Klebeband bzw. Gewebeklebeband insgesamt handeinreißbar ausgebildet. Das heißt, zum Einreißen in Querrichtung, das heißt in Richtung der Schussfäden 3, wird eine Querreißkraft von weniger als 10 N/cm Breite des Gewebeträgers 1 benötigt.

## Patentansprüche

1. Verwendung von gezwirnten Schussfäden (3) zur Erhöhung der Abriebbeständigkeit bei einem in Querrichtung handeinreißbaren Wickelband zur Ummantelung von Kabeln in Automobilen, mit einem bandförmigen Polyestergewebeträger (1) aus materialgleichen Kettfäden (2) und Schussfäden (3), wobei sowohl die Kettfäden (2) als auch die Schussfäden (3) als jeweils Polyesterfäden (2, 3) ausgebildet sind, und
mit einer wenigstens einseitigen Klebebeschichtung (4), wobei
sich die Schussfäden (3) jeweils aus um eine Längsachse (L) miteinander verdrehten Einzelfäden (3a, 3b) zusammensetzen und der jeweilige Schussfaden (3) aus zwei oder mehr Einzelfäden (3a, 3b) gebildet ist, die mit mehr als 400 Drehungen pro Meter Schussfaden (3) miteinander verdreht sind, wobei
die Fadenstärke der jeweiligen Schussfäden (3) größer oder gleich der Fadenstärke der jeweiligen Kettfäden (2) ist, wobei ferner
die auf die Breite bezogene Fadenstärke der Kettfäden (2) kleiner oder gleich der auf die Länge bezogenen Fadenstärke der Schussfäden (3) ist, wobei weiter
zumindest die Schussfäden (3) jeweils mit mehr als 180 Drehungen pro Meter Schussfaden (3) gezwirnt sind, und wobei
wenigstens die Abriebklasse C an einem Dorn mit 5 mm Durchmesser gemäß der Prüfungsrichtlinie LV 312 erfüllt wird.

2. Verwendung nach Anspruch 1, **dadurch gekennzeichnet, dass** die jeweilige Fadenstärke des gezwirnten Schussfadens (3) ebenso wie die Fadenstärke des Kettfadens (2) jeweils mehr als 40 dtex, insbesondere 80 dtex und mehr und vorzugsweise mehr als 100 dtex beträgt.

3. Verwendung nach Anspruch 2, **dadurch gekennzeichnet, dass** die jeweilige Fadenstärke des gezwirnten Schussfadens (3) und diejenige des Kettfadens (2) jeweils weniger als 550 dtex beträgt.

4. Verwendung nach einem der Ansprüche 1 bis 3, **dadurch gekennzeichnet, dass** der jeweilige Schussfäden (3) aus zwei bis maximal zehn Einzelfäden (3a, 3b) oder 20 bis 80 Filamentfäden (5) gebildet ist.

5. Verwendung nach einem der Ansprüche 1 bis 4, **dadurch gekennzeichnet, dass** der jeweilige Schussfaden (3) aus zwei oder mehr Einzelfäden (3a, 3b) gebildet ist, die mit mehr als 450 Drehungen pro Meter Schussfaden (3), insbesondere mehr als 500 Drehungen pro Meter und vorzugsweise zwischen 500 und 600 Drehungen pro Meter Schussfaden (3), miteinander verdreht sind.

6. Verwendung nach einem der Ansprüche 1 bis 5, **dadurch gekennzeichnet, dass** die Schussfäden (3) durchgängig einen Rechtsdrall oder Linksdrall der Einzelfäden (3a, 3b) aufweisen.

7. Verwendung nach einem der Ansprüche 1 bis 6, **dadurch gekennzeichnet, dass** die auf die Breite bezogene Fadenstärke der Kettfäden (2) zwischen 2000 dtex/cm bis 4000 dtex/cm angesiedelt ist.

8. Verwendung nach einem der Ansprüche 1 bis 7, **dadurch gekennzeichnet, dass** die auf die Länge bezogene Fadenstärke der Schussfäden (3) im Bereich von 8000 dtex/cm bis 16000 dtex/cm liegt.

9. Verwendung nach einem der Ansprüche 1 bis 8, **dadurch gekennzeichnet, dass** die Kettfäden (2) und die den Schussfaden (3) jeweils bildenden Einzelfäden (3a, 3b) jeweils aus 20 bis 80 Filamenten gebildet sind.

10. Verwendung nach einem der Ansprüche 1 bis 9, **dadurch gekennzeichnet, dass** die Einzelfäden (3a, 3b) des gezwirnten Schussfadens (3) eine Fadenstärke von jeweils 100 dtex bis 300 dtex aufweisen.

11. Verwendung nach einem der Ansprüche 1 bis 10, **dadurch gekennzeichnet, dass** die Schussfäden (3) jeweils aus zwei oder mehr Einzelfäden (3a, 3b) mit jeweils gleicher Fadenstärke gebildet sind.

12. Verwendung nach einem der Ansprüche 1 bis 11, **dadurch gekennzeichnet, dass** die Fäden (2, 3; 3a, 3b) jeweils texturiert sind.

13. Verwendung nach einem der Ansprüche 1 bis 12, **dadurch gekennzeichnet, dass** die Anzahl der Kettfäden (2) zwischen 40 bis 60 pro Zentimeter beträgt.

14. Verwendung nach einem der Ansprüche 1 bis 13, **dadurch gekennzeichnet, dass** die Anzahl der Schussfäden (3) zwischen 20 bis 30 pro Zentimeter angesiedelt ist.

15. Verwendung nach einem der Ansprüche 1 bis 14, **dadurch gekennzeichnet, dass** der Titerquotient, also das Verhältnis der auf die Länge bezogenen Fadenstärke der Schussfäden (3) zur auf die Breite bezogenen Fadenstärke der Kettfäden (2), zwischen 2 und 8 angesiedelt ist.

## Claims

1. Use of twined weft fibres (3) to increase the abrasion resistance in a transversely hand-tearable wrapping tape for cladding cables in automobiles, with a tape-like polyester backing fabric (1) made from warp fibres (2) and weft fibres (3) of the same material, wherein both the weft fibres (3) and the warp fibres (2) are formed respectively as polyester fibres (2, 3), and
with an adhesive coating (4) on at least one side thereof, wherein
the weft fibres are each constituted as single fibres (3a, 3b) twisted together about a longitudinal axis (L) and each weft fibre (3) is formed from two or more single fibres (3a, 3b), which are twisted with each other with more than 400 twists per metre of weft fibre (3), wherein
the denier of each of the weft fibres (3) is greater than or equal to the denier of each of the warp fibres (2), wherein further
the denier of the warp fibres (2) relative to the width is smaller than or equal to the denier of the weft fibres (3) relative to the length, wherein further
at least the weft fibres (3) are each twined with more than 180 twists per metre of weft fibre (3), and wherein
at least abrasion class C is satisfied on a mandrel with 5 mm diameter in accordance with test guideline LV 312.

2. Use according to Claim 1, **characterized in that** the denier of each twined weft fibre (3) and the denier of the warp fibre (2) is more than 40 dtex, in particular 80 dtex and more, and preferably more than 100 dtex in each case.

3. Use according to Claim 2, **characterized in that** the denier of each twined weft fibre (3) and that of the warp fibre (2) are less than 550 dtex in each case.

4. Use according to any one of Claims 1 to 3, **characterized in that** each weft fibre (3) is formed from two to not more than ten single fibres (3a, 3b) or 20 to 80 filament fibres (5).

5. Use according to any one of Claims 1 to 4, **characterized in that** each weft fibre (3) is formed from filament fibres (5) or from two or more single fibres (3a, 3b) which are twisted with each other with more than 450 twists per metre of weft fibre (3), in particular more than 500 twists per metre and preferably between 500 and 600 twists per metre of weft fibre (3).

6. Use according to any one of Claims 1 to 5, **characterized in that** the weft fibres (3) have a continuous righthand twist or left-hand twist of the filament fibres (5) and of the single fibres (3a, 3b).

7. Use according to any one of Claims 1 to 6, **characterized in that** the denier of the warp fibres (2) relative to the width has a value in the range from 2000 dtex/cm to 4000 dtex/cm.

8. Use according to any one of Claims 1 to 7, **characterized in that** the denier of the weft fibres (3) relative to the length has a value in the range from 8000 dtex/cm to 16000 dtex/cm.

9. Use according to any one of Claims 1 to 8, **characterized in that** the warp fibres (2) and the weft fibres (3) and the single fibres (3a, 3b) that form each weft fibre (3) are each formed from 20 to 80 filaments.

10. Use according to any one of Claims 1 to 9, **characterized in that** the single fibres (3a, 3b) of the twined weft fibre (3) each have a denier from 100 dtex to 300 dtex.

11. Use according to any one of Claims 1 to 10, **characterized in that** the weft fibres (3) are each formed from two or more single fibres (3a, 3b), each having the same denier.

12. Use according to any one of Claims 1 to 11, **characterized in that** the number of filament fibres (5) and/or the fibres (2, 3; 3a, 3b) are each textured.

13. Use according to any one of Claims 1 to 12, **characterized in that** the number of warp fibres (2) has a value from 40 to 60 per centimetre.

14. Use according to any one of Claims 1 to 13, **characterized in that** the number of weft fibres (3) is in the range between 20 to 30 per centimetre.

15. Use according to any one of Claims 1 to 14, **characterized in that** the titre quotient, that is to say the ratio of the denier relative to the length of the weft fibres (3) to the denier relative to the width of the warp fibres (2) is in the range between 2 and 8.

## Revendications

1. Utilisation de fils de trames retors (3) pour augmenter la résistance à l'usure pour une bande d'enroulement déchirable à la main dans le sens transversal pour l'enrobage de câbles dans des automobiles, avec un support de tissu en polyester (1) en forme de bande composé de fils de chaîne (2) et de fils de trame (3) de matériau identique, sachant que tant les fils de chaîne (3) que les fils de trame (2) sont constitués respectivement de fils de polyester (2, 3) et
avec au moins un revêtement adhésif unilatéral (4), sachant que
les fils de trame sont respectivement composés comme des fils individuels (3a, 3b) torsadés les uns avec les autres autour d'un axe longitudinal (L), sachant que le fil de trame (3) respectif est formé de deux ou plusieurs fils individuels (3a, 3b), qui sont torsadés les uns avec les autres avec plus de 400 tours par mètre de fil de trame (3), sachant que
l'épaisseur de fil des fils de trame (3) respectifs est plus grande ou identique à l'épaisseur de fil des fils de chaîne (2) respectifs, sachant qu'en plus
l'épaisseur de fil des fils de chaîne (2) en référence à la largeur est plus petite ou identique à l'épaisseur de fil des fils de trame (3) en référence à la longueur, sachant par ailleurs qu'
au moins les fils de trame (3) sont respectivement retordus avec plus de 180 tours par mètre de fil de trame (3) et sachant qu'
au moins la catégorie d'usure C sur une broche avec 5 mm de diamètre est satisfaite selon la directive de contrôle LV 312.

2. Utilisation selon de revendication 1, **caractérisée en ce que** l'épaisseur de fil respective du fil de trame retors (3) ainsi que l'épaisseur de fil du fil de chaîne (2) est respectivement supérieure à 40 dtex, en particulier de 80 dtex et plus et de préférence de plus de 100 dtex.

3. Utilisation selon la revendication 2, **caractérisée en ce que** l'épaisseur de fil respective du fil de trame retors (3) et celle du fil de chaîne (2) se situe respectivement à moins de 550 dtex.

4. Utilisation selon l'une quelconque des revendications 1 à 3, **caractérisée en ce que** le fil de trame (3) respectif est formé de deux à maximum dix fils individuels (3a, 3b) ou de 20 à 80 fils de filament (5).

5. Utilisation selon l'une quelconque des revendications 1 à 4, **caractérisée en ce que** le fil de trame (3) respectif est formé de fils de filament (5) ou de deux ou plusieurs fils individuels (3a, 3b), qui sont torsadés les uns avec les autres avec plus de 450 tours par mètre de fil de trame (3), en particulier plus de 500 tours par mètre et de préférence entre 500 et 600 tours par mètre de fil de trame (3).

6. Utilisation selon l'une quelconque des revendications 1 à 5, **caractérisée en ce que** les fils de trame (3) comportent généralement un pas à droite ou un pas à gauche des fils de filament (5) ou des fils individuels (3a, 3b).

7. Utilisation selon l'une quelconque des revendications 1 à 6, **caractérisée en ce que** l'épaisseur de fil en référence à la largeur des fils de chaîne (2) se situe dans une gamme de 2000 dtex/cm à 4000 dtex/cm.

8. Utilisation selon l'une quelconque des revendications 1 à 7, **caractérisée en ce que** l'épaisseur de fil en référence à la longueur des fils de trame (3) se situe dans une gamme de 8000 dtex/cm à 16000 dtex/cm.

9. Utilisation selon l'une quelconque des revendications 1 à 8, **caractérisée en ce que** les fils de chaîne (2) et les fils de trame (3) ou les fils individuels (3a, 3b) formant respectivement le fil de trame (3) sont formés respectivement de 20 à 80 filaments.

10. Utilisation selon l'une quelconque des revendications 1 à 9, **caractérisée en ce que** les fils individuels (3a, 3b) du fil de trame retors (3) comportent une épaisseur de fil de respectivement 100 dtex à 300 dtex.

11. Utilisation selon l'une quelconque des revendications 1 à 10, **caractérisée en ce que** les fils de trame (3) sont formés respectivement de deux ou plusieurs fils individuels (3a, 3b) avec respectivement la même épaisseur de fil.

12. Utilisation selon l'une quelconque des revendications 1 à 11, **caractérisée en ce que** le nombre de fils de filament (5) et/ou les fils (2, 3 ;3a, 3b) sont respectivement texturés.

13. Utilisation selon l'une quelconque des revendications 1 à 12, **caractérisée en ce que** le nombre des fils de chaîne (2) se situe entre 40 à 60 par centimètre.

14. Utilisation selon l'une quelconque des revendications 1 à 13, **caractérisée en ce que** le nombre des fils de trame (3) est établi entre 20 à 30 par centimètre.

15. Utilisation selon l'une quelconque des revendications 1 à 14, **caractérisée en ce que** le quotient de titre, donc le rapport de l'épaisseur de fil des fils de trame (3) en référence à la longueur par rapport à l'épaisseur de fil des fils de chaîne (2) en référence à la largeur, est établie entre 2 et 8.
